# EUROPÄISCHE PATENTSCHRIFT

(11) **EP 2 406 029 B1**
(45) Veröffentlichungstag und Bekanntmachung des Hinweises auf die Patenterteilung: **21.11.2012**
(21) Anmeldenummer: 10711837.4
(22) Anmeldetag: 10.03.2010
(51) Int. Cl.: B23C 5/10, B23D 77/00, B23B 51/06

(54) **ZERSPANUNGSWERKZEUG FÜR EINE WERKZEUGMASCHINE**
CUTTING TOOL FOR A MACHINE TOOL
OUTIL DE COUPE POUR UNE MACHINE-OUTIL

(30) Priorität: 10.03.2009 DE 102009012433
(43) Veröffentlichungstag der Anmeldung: 18.01.2012
(73) Patentinhaber: Kennametal Inc., Latrobe, PA 15650-0231 (US)
(72) Erfinder: SCHUFFENHAUER, Michael, 90765 Fürth (DE); ECKL, Bernhard, 92546 Rottendorf (DE); SPICHTINGER, Xaver, 92526 Oberviechtach (DE); ZIMMERMANN, Armin, 92526 Oberviechtach (DE)
(74) Vertreter: FDST Patentanwälte
(86) Internationale Anmeldenummer: PCT/EP2010/001478
(87) Internationale Veröffentlichungsnummer: WO 2010/102793

(56) Entgegenhaltungen:
- EP-A1- 1 240 963
- DE-A1- 10 326 928
- DE-A1-102005 051 545
- DE-A1-102006 028 373

## Beschreibung

Die Erfindung betrifft ein modular aufgebautes Zerspanungswerkzeug für eine Werkzeugmaschine gemäβ Oberbegriff des Anspruchs 1, ein solches Zerspannungswerkzeug ist aus der DE 10 2006 028373 A1 bekannt. Dieses Werkzeug besteht aus einem Schneidkopf, einem Schaft und einer zwischen Schaft und Schneidkopf wirksamen Kupplung. Mit Hilfe des Schafts wird das Werkzeug in die Werkzeugaufnahme, beispielsweise das Spannfutter einer Werkzeugmaschine, eingespannt. Mittels der Kupplung ist der Schneidkopf lösbar am Schaft fixiert. Der Schneidkopf kann je nach dem gewünschten Einsatzgebiet als Bohrkopf, Fräskopf oder Reibkopf ausgestaltet sein. Es kann sich aber auch um einen Schneidkopf für jedes andere beliebige Zerspanungsverfahren handeln.

Aus der zum Stand der Technik gehörenden DE 103 26 928 A ist Zerspanungswerkzeug mit einer aufwändigen Kühlmittelführung bekannt. Hier sind über den Umfang des Schafts mehrere Kühlmittelkanäle verteilt. Die Anzahl der Kühlmittelkanäle entspricht der Anzahl der Schneiden am Schneidkopf. Über Kühlmittelbohrungen im Schneidkopf sind die jeweiligen Kühlmittelkanäle mit ihren jeweils zugeordneten Schneiden leitend verbunden. Nachteilig hierbei ist die mit der großen Anzahl von Kühlkanälen einhergehende Schwächung der Biegesteifigkeit des Schafts. Weiterhin nachteilig ist die Tatsache, dass jede Schaftausführung nur mit einer bestimmten Schneidkopfausführung gemeinsam verwendbar ist.

Aus der DE 10 2005 031 683 A ist ein Zerspanungswerkzeug mit einer aus einem zentralen Kühlmittelkanal oder Kühlmittelrohr und mehreren Kühlmittelkanälen bestehende Kühlmittelführung bekannt. Die Kühlmittelkanäle sind dabei als Passbohrungen oder Axialnuten im Endbereich des Schafts oder eines endseitig in den Schaft eingebrachten Funktionseinsatzes ausgestaltet. Nachteilig ist dabei die große Anzahl von Kühlkanälen an die damit wiederum einhergehende Schwächung der Biegesteifigkeit des Schafts im Schaftendbereich.

Bei dem aus der DE 103 26 928 A bekannten Werkzeug wird ein Spannkegel als Kupplung zwischen Schneidkopf und Schaft verwendet. Die Wirkflächen sind wegen der Kegelform des Spannkegels hier sehr klein. Infolge dieser kleinen Wirkflächen lassen sich nur sehr geringe Drehmomente vom Schaft auf den Schneidkopf und umgekehrt übertragen. Darüber hinaus wird es als nachteilig empfunden, dass die Spannflächen, also die Kegelflächen des Spannkegels am Schneidkopf und die entsprechenden Gegenflächen, sehr tief im Schaft angeordnet sind. Die Flächen sind bei Einsetzen des Schneidkopfs von außen nicht sichtbar. Es ist deshalb möglich, dass die Flächen sich beim Einsetzen des Schneidkopfs in den Schaft verkanten. Diese Gefahr des Verkantens kann durch die Anbringung von Indikatoren am Werkzeug gemindert werden. Diese Anbringung ist jedoch sehr aufwändig.

Aus der US 6,905,278 ist eine weitere Ausgestaltung für die Kupplung zwischen Schneidkopf und Schaft bekannt. Die Kupplung ist hierbei als Schraubeinsatz mit einem Differenzgewinde ausgestaltet. Der Schraubeinsatz weist hierfür zwei Gewinde unterschiedlicher Steigung auf. Eines der Gewinde ist als Linksgewinde und das andere als Rechtsgewinde ausgestaltet. Zunächst wird das Feingewinde in den jeweiligen Gewindeträger eingeschraubt. In einem weiteren Arbeitsgang wird das Normal- oder Grobgewinde in den anderen Gewindeträger eingeschraubt, wodurch beide Kupplungsglieder, also Schneidkopf und Schaft, wirksam gegeneinander verspannt werden.

### Aufgabe der Erfindung

Der Erfindung liegt - ausgehend vom Stand der Technik - die Aufgabe zugrunde, das Zerspanungswerkzeug konstruktiv zu vereinfachen.

### Lösung der Aufgabe

Zur Lösung dieser Aufgabe dient ein Zerspanungswerkzeug mit der im Anspruch 1 beanspruchten Kühlmittelversürgung. Die Ansprüche 2 bis 4 enthalten bevorzugte Ausgestaltungen dieses Zerspanungswerkzeugs. Die Zerspanungswerkzeuge nach den Ansprüchen 5 und 7 weiten unterschiedlich ausgestaltete erfinderische Kupplungen auf.

Nach der Lehre des Anspruchs 1 weist der Schneidkopf an seiner Schneidkopfrückwand einen Kupplungszapfen auf. Dieser Kupplungszapfen liegt bei geschlossener Kupplung in einer Aufnahme im Schaft ein. Im Schaft ist zunächst ein zentraler Kühlmittelkanal vorgesehen. Dieser zentrale Kanal verzweigt sich im Bereich der Aufnahme auf zwei Teilkanäle. Diese Teilkanäle sind bis zur endseitigen Plananlage des Schafts geführt und münden dort aus dem Schaft aus. Auf diese Weise flankieren die beiden Teilkanäle die Aufnahme. Aufgrund der Einbringung von nur zwei Teilkanälen in den Schaft ist seine Stabilität im Bereich der Aufnahme nicht nennenswert geschwächt. Die Kupplung, welche in der Aufnahme im Schaft angeordnet ist, ist von Kühlmittel und Schmiermittel völlig frei gehalten, so dass hier Korrosion, Verschmutzung oder Ähnliches nicht auftreten können.

Zur Verteilung des Kühlmittels und zur Zuleitung des Kühlmittels zu den Schneiden am Schneidkopf ist zunächst in einen Planbund auf der Schneidkopfrückwand eine ringförmige Verteilernut eingeformt. Diese Verteilernut kann spanend in den Planbund eingebracht werden und ist folglich fertigungstechnisch einfach und damit kostengünstig herstellbar. Die Verteilernut weist ihrerseits eine oder mehrere Kühlmittelbohrungen auf. Diese Kühlmittelbohrungen versorgen über mit ihnen verbundene kleine Kühlmittelkanäle die Schneiden mit dem Kühlmittel.

Nach Anspruch 2 entspricht die Anzahl der Kühlmittelbohrungen der Anzahl der mit ihnen verbundenen Schneiden. Mit anderen Worten ist jeder Schneide eine eigene Kühlmittelbohrung mit einem daran angeschlossenen und sich zur Schneide erstreckenden Kühlmittelkanal zugeordnet. Auf diese Weise ist es einfach möglich, jede Schneide mit Kühlmittel zu versorgen.

Da die Verteilernut das Kühlmittel aus nur zwei Teilkanälen auf eine beliebige Anzahl von Schneiden verteilt, können mit ein und demselben Schaft die verschiedensten Schneidköpfe mit den verschiedensten Anzahlen von Schneiden gekoppelt werden. Mit der Erfindung ist es also möglich, unabhängig von der Anzahl der Kühlmittelzuleitungskanäle im Schaft verschiedenartige Schneidköpfe mit völlig unterschiedlichen Anzahlen von Schneiden und Kühlmittelbohrungen zu koppeln.

Nach Anspruch 3 ist es auch möglich, die den Kühlmittelbohrungen in der Verteilernut zugeordneten Kühlmittelkanäle auf der Schneidkopfstirnseite ausmünden zu lassen. Diese Ausführungsform dient zur spanenden Bearbeitung beispielsweise zur Reibbearbeitung von Sacklochbohrungen. Hier wird das Kühlmittel auf den Bohrungsboden gleichsam aufgespritzt und von dort an die Schneiden reflektiert. Die Schneiden werden auf diese Weise also indirekt mit Kühlmittel versorgt. Die erfindungsmäßige Kühlmittelversorgung eignet sich also nicht nur für Werkzeuge, welche die Späne vor sich herschieben, sondern auch für Werkzeuge, die das Spanmaterial über Nuten am Umfang aus der Bohrung herausleiten.

Nach Anspruch 4 sind halbmondförmige Aussparungen am Öffnungsrad der Aufnahme vorgesehen, um zum einen das Einströmen des Kühlmittels in die Verteilernut zu begünstigen und zum anderen sicherzustellen, dass die Plananlage auch nach dem Nacharbeiten sowohl der schaftseitigen Plananlage als auch nach dem Nachbearbeiten des schneidkopfseitigen Planbundes auf dem Planbund bündig aufliegt. Mit anderen Worten soll verhindert werden, dass nicht nachbearbeitbare Bereiche des Planbundes ein flächiges Aufliegen der Plananlage auf dem Planbund verhindern.

Nach der Lehre des Anspruchs 5 weist der Schneidkopf an seiner Schneidkopfrückwand einen Kupplungszapfen auf. Dieser Kupplungszapfen liegt bei geschlossener Kupplung in einer Aufnahme im Schaft ein. Im Bereich des Öffnungsrandes der Aufnahme ist eine sich ausgehend vom Öffnungsrand in die Aufnahme hinein erstreckende Anlagefläche als Teil einer formschlüssigen Kupplung ausgebildet. Dementsprechend ist am Außenmantel des Kupplungszapfens eine Gegenanlagefläche ausgebildet. Bei geschlossener Kupplung liegen die Anlagefläche und die Gegenanlagefläche aneinander und bilden so einen Formschluss aus. Da die Anlagefläche im Bereich des Öffnungsrandes der Aufnahme am Schaft angeordnet ist, ist sie von außen gut sichtbar, was das Verschieben der Anlagefläche und Gegenanlagefläche beim Einfädeln des Kupplungszapfens in die Aufnahme und damit eine einfache und zielsichere Montage des Schneidkopfs am Schaft begünstigt.

Mit Hilfe der nach Anspruch 6 als Planflächen ausgestalteten Anlagefläche und Gegenanlagefläche lassen sich vergleichsweise hohe Drehmomente übertragen. Die Drehmomentübertragung wird verbessert durch den gleichmäßigen Kraftangriff mit Hilfe der im Anspruch 6 ebenfalls vorgeschlagenen paarweisen Ausbildung und einander gegenüberliegender Anordnung der Anlageflächen bzw. der Gegenanlageflächen.

Mit Hilfe des den Durchmesser des Kupplungszapfens vergrößernden Mantelrings gemäß Anspruch 7 können die Gegenanlageflächen einfach am Kupplungszapfen spanend gefertigt werden.

Mit dem erfindungsmäßigen Zerspanungswerkzeug ist es zum einen möglich, den Schneidkopf sicher an den Schaft anzukoppeln, weil die Anlageflächen und Gegenanlageflächen gut sichtbar angeordnet sind. Zum anderen ist es erfindungsmäßigen Kupplung möglich, besonders hohe Drehmomente zwischen Schneidkopf und Schaft zu übertragen.

Nach der Lehre des Anspruchs 8 dient ein Schraubeinsatz mit zwei Außengewinden gleicher Gangrichtung und unterschiedlicher Steigung als Kupplung. Es handelt sich um einen Schraubeinsatz mit einem so genannten Differenzgewinde.

Nach Anspruch 9 wird alternativ bzw. ergänzend ein Feingewinde zwischen Schneidkopf und Schraubeinsatz eingesetzt, während zwischen Schaft und Schraubeinsatz ein Standardgewinde oder Grobgewinde eingesetzt werden kann. Die Verwendung von gleichläufigen Gewinden hat beim Spannen des Werkzeugs, also beim Spannen des Schneidkopfs im Schaft den Vorteil, dass beide Gewindesteigungen sich gleichsam subtrahieren, weil sich das Feingewinde beim Einschrauben des Grobgewindes teilweise wieder herausschraubt. Im Gegensatz zur Verwendung von gegenläufigen Gewinden wird so ein sehr viel geringeres Drehmoment zum Spannen des Schneidkopfs gegenüber dem Schaft benötigt.

Die Verwendung von Rechtsgewinden nach Anspruch 9 hat zudem den Vorteil, dass im Schaft auch ein üblicher Schneidkopf gespannt werden kann, der an seiner Schaftrückwand das übliche Rechtsgewinde trägt. Die Schäfte lassen sich dann also nicht nur für das Spannen des Schneidkopfs mit Hilfe eines Schraubeinsatzes mit Differenzgewinde, sondern auch zum Spannen von Schneidköpfen mit handelsüblichen Rechtsgewinden verwenden.

### Beschreibung der Figuren

Ein Ausführungsbeispiel der Erfindung wird im Folgenden anhand der Figuren näher erläutert. Es zeigen jeweils in schematischen und vereinfachten, teilweise ausschnittsweisen Darstellungen:
- Fig. 1: eine Explosionsdarstellung des Schneidkopfs und des Schafts,

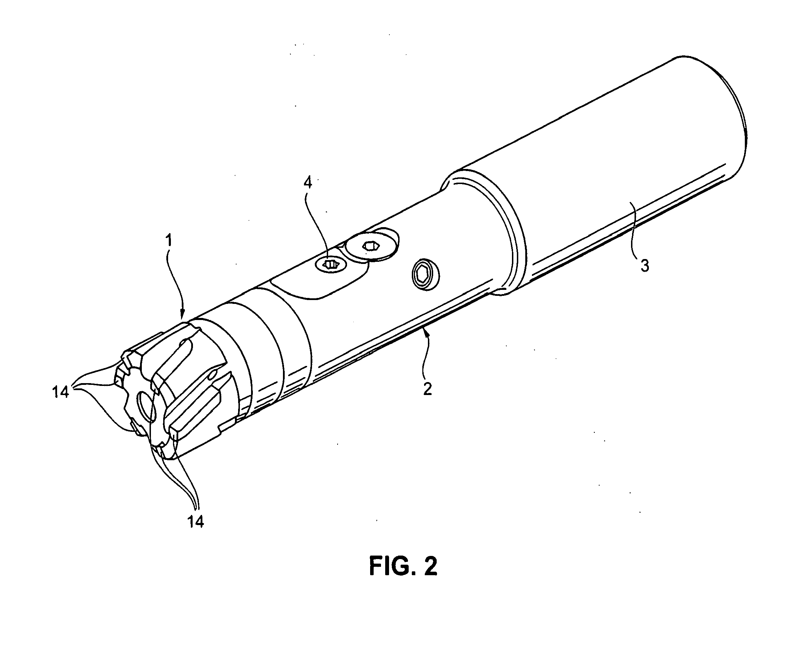

- Fig. 2: den am Schaft montierten Schneidkopf gemäß Fig. 1,
- Fig. 3: eine Draufsicht auf den Öffnungsrand der Aufnahme im Schaft,
- Fig. 4: eine Draufsicht auf die Schneidkopfrückwand mit angedeutetem Kühlmittelverlauf,
- Fig. 5: eine weitere Draufsicht auf die Schneidkopfrückwand,
- Fig. 6: eine Seitenansicht des endmontierten Schneidwerkzeugs,
- Fig. 7: eine Draufsicht auf die Stirnseite des Schneidkopfs gemäß Pfeil VII in Fig. 6,
- Fig. 8: den Schnitt VIII-VIII in Fig. 6,
- Fig. 9: den Schnitt IX-IX in Fig. 8,

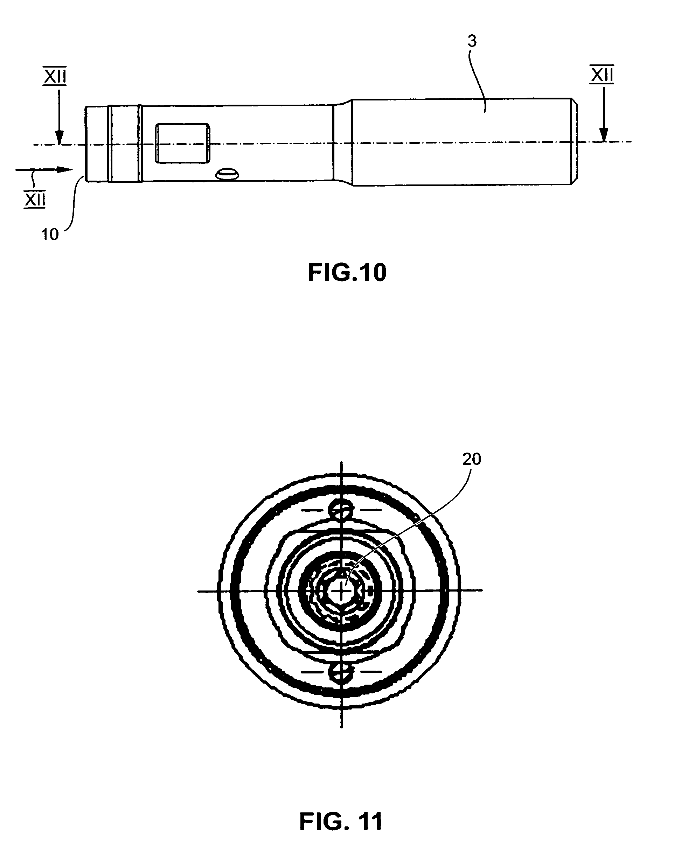

- Fig. 10: eine Seitenansicht des Schafts,
- Fig. 11: eine Stirnansicht des Schafts gemäß Pfeil XI-XI in Fig. 10,

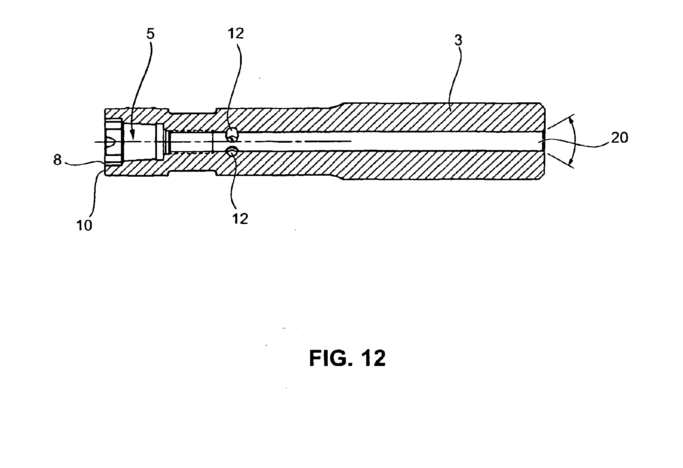

- Fig. 12: den Schnitt XII-XII in Fig. 10,
- Fig. 13: eine Explosionszeichnung der Ausführungsform des Werkzeugs mit Schraubeinsatz als Kupplung.

### Beschreibung des Ausführungsbeispiels

Das erfindungsmäßige Zerspanungswerkzeug setzt sich zusammen aus einem Schneidkopf 1 und aus einem mit dem Schneidkopf 1 gekoppelten Schaft 2. Der Schaft 2 weist eine Werkzeugspannfläche 3 auf. Mit der Werkzeugspannfläche 3 wird der Schaft 2 in ein in den Figuren nicht dargestelltes Werkzeugspannfutter einer Werkzeugmaschine gespannt. Der Schaft 2 weist des Weiteren eine Spannschraube 4 zum Schließen der Kupplung auf. Der Schaft 2 weist eine etwa hohlzylindrische Aufnahme 5 für den Kupplungszapfen 6 des Schneidkopfs 1 auf. Der Kupplungszapfen 6 steht aus der Schneidkopfrückwand 7 des Schneidkopfs 1 hinaus.

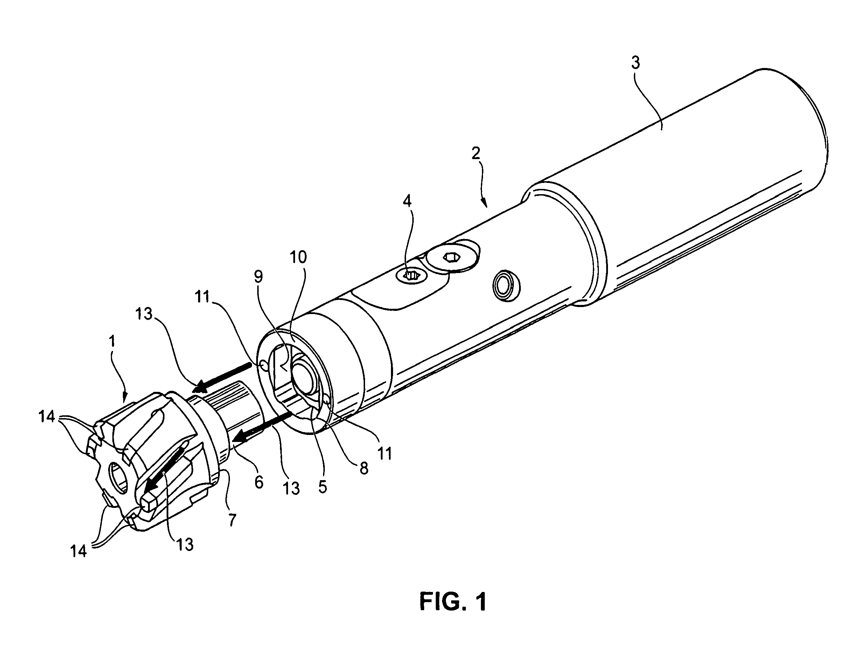

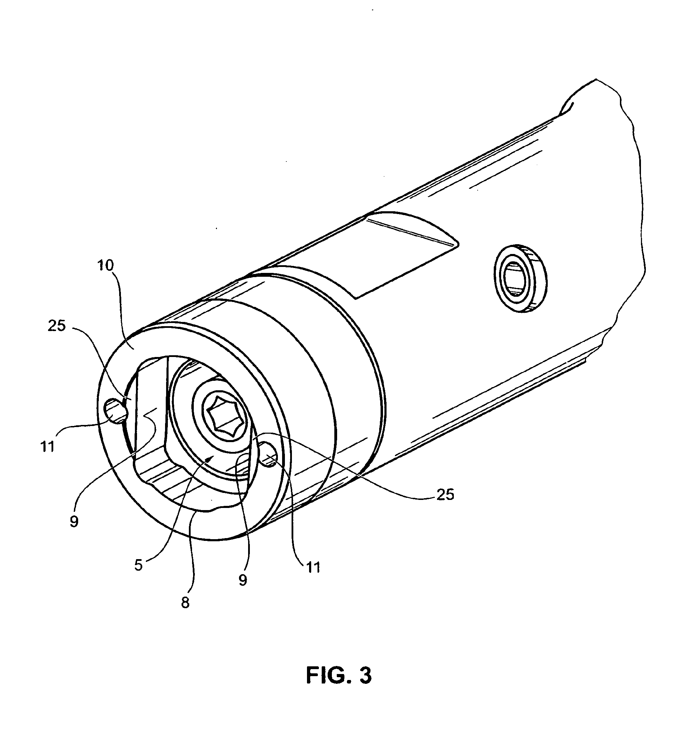

Am Öffnungsrand 8 der Aufnahme 5 erkennbar ist in Fig. 1 eine Planfläche 9. Die Planflächen 9 sind am Schaft 2 paarweise einander gegenüberliegend ausgestaltet. Dies ist in Fig. 3 erkennbar. Der Öffnungsrand 8 der Aufnahme 5 ist von der ringartigen Plananlage 10 umgeben. Die Plananlage 10 ist jeweils durchbrochen von den einander gegenüberliegenden Ausmündungen 11 der Teilkanäle 12. Aus den Ausmündungen 11 fließt das Kühlmittel in der durch die dicken Pfeile angedeuteten Kühlmittelflussrichtung 13 in Richtung auf die einzelnen Schneiden 14 am Schneidkopf 1.

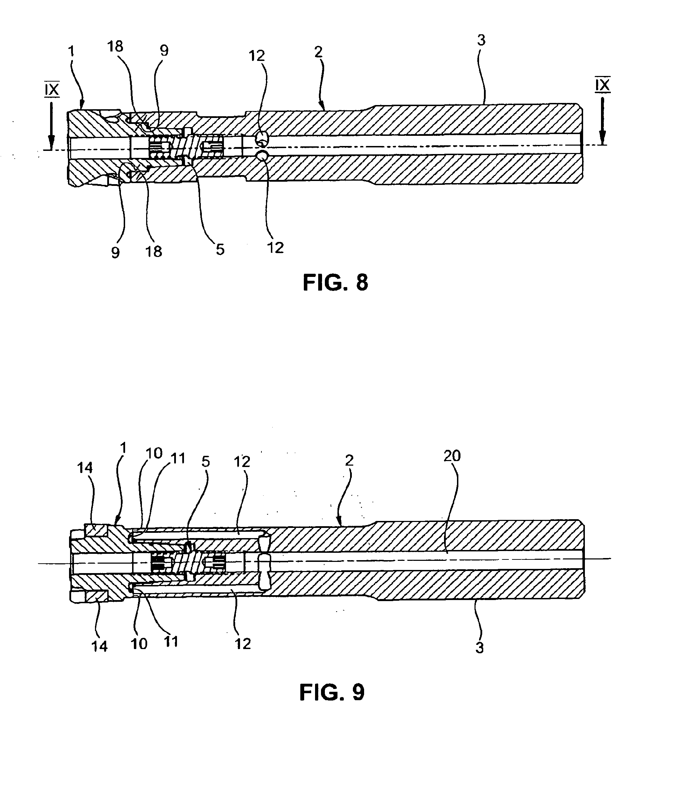

Zur Verteilung des Kühlmittels strömt das Kühlmittel in Kühlmittelflussrichtung 13 aus den Ausmündungen 11 in die in die Schneidkärperrückwand 7 eingeformte Verteilernut 15. Die Verteilernut 15 ist einfach in einen an der Schneidkopfrückwand 7 ausgebildeten Planbund 16 eingestochen. Der Planbund 16 umgibt den zentral aus der Schneidkopfrückwand 7 hinausstehenden Kupplungszapfen 6 kranzartig. Der dem Planbund 16 benachbarte Bereich des Kupplungszapfens 6 ist als den Durchmesser des Kupplungszapfens 6 vergrößernder Mantelring 17 ausgestaltet. In den Mantelring 17 sind zwei einander gegenüberliegende Planflächen 18 eingeformt. Die Planflächen 18 des Schneidkopfs 1 bilden so die Gegenanlageflächen für die ebenfalls als Planflächen 9 ausgebildeten Anlageflächen im Schaft 2. Dies ist in Fig. 8 erkennbar. In Fig. 8 auch erkennbar ist die paarweise einander gegenüberliegende Anordnung sowohl der Planflächen 9 am Schaft 2 als auch der Planflächen 18 am Schneidkopf 1.

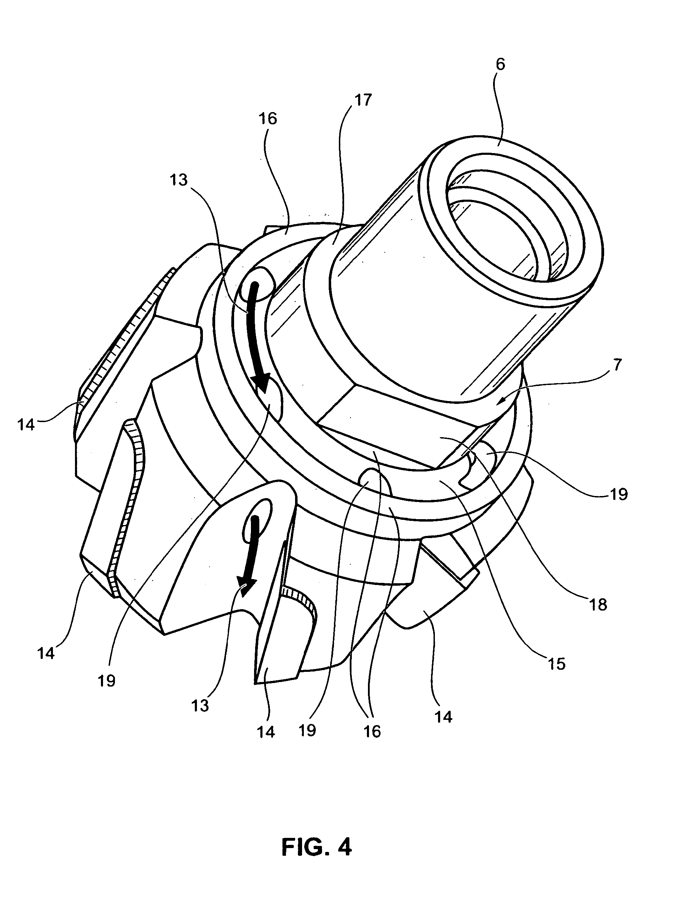

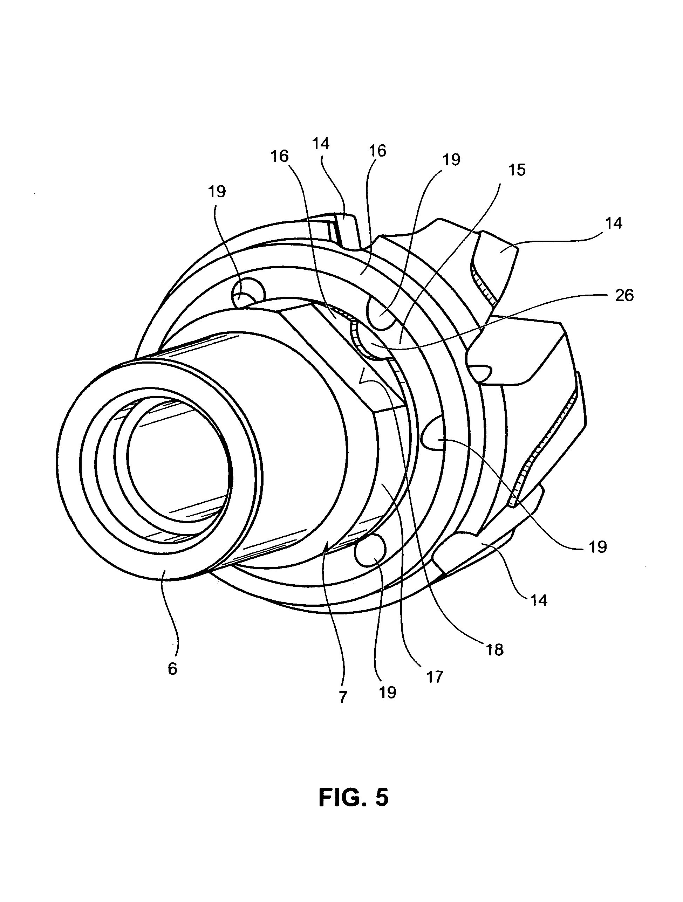

In die Verteilernut 15 eingebracht sind die Kühlmittelbohrungen 19. Die Anzahl der Kühlmittelbohrungen 19 entspricht in dem in Fig. 4 und Fig. 5 dargestellten Ausführungsbeispiel der Anzahl der Schneiden 14. Jeder Schneide 14 ist somit eine Kühlmittelbohrung 19 zugeordnet. Die Kühlmittelbohrung 19 wird in Kühlmittelflussrichtung 13 vom Kühlmittel durchströmt. Die Kühlmittelbohrungen 19 sind durch kleine Kühlmittelkanäle mit den Schneiden 14 verbunden und fördern so das Kühlmittel zu den Schneiden 14. Kühlmittel tritt aus dem Schaft aus den beiden einander gegenüberliegenden Ausmündungen 11 in Kühlmittelflussrichtung 13 aus und läuft in die Verteilernut 15 hinein und verlässt die Verteilernut 15 wiederum in Kühlmittelflussrichtung 13 durch die Kühlmittelbohrungen 19 in Richtung auf die Schneiden 14.

Der Schaft 2 ist in Mittellängsrichtung von einem zunächst zentralen Kühlmittelkanal 20 durchsetzt. Der Kühlmittelkanal 20 verzweigt sich im Bereich der Aufnahme 5 - was in Fig. 9 gut erkennbar ist - in zwei Teilkanäle 12. Die Teilkanäle 12 flankieren die Aufnahme 5 und münden in die Ausmündungen 11 im Bereich der Plananlage 10. Das Kühlmittel fließt also zunächst durch den zentralen Kühlmittelkanal 20 und teilt sich seinerseits in zwei Teilströme auf, welche jeweils die Teilkanäle 12 durchströmen und mündet in den Ausmündungen 11 an der Plananlage 10 aus.

In der Darstellung der Fig. 3 erkennbar sind die halbmondförmigen Aussparungen 25 im Öffnungsrand 8 im Bereich der Ausmündungen 11. Diese halbmondförmigen Aussparungen 25 verhindern ein Auflegen der Plananlage 10 auf dem nicht nachbearbeitbaren, der Planfläche 18 benachbarten Bereich des Planbundes 16. Dieser der Planfläche 18 benachbarte Bereich des Planbundes 16 weist in Fig. 5 eine trichterartige Aufweitung 26 auf. Die trichterartige Aufweitung 26 bewirkt insbesondere im Zusammenspiel mit den Aussparungen 25 zusätzlich eine schnellere Befüllung der Verteilernut 15 mit dem Kühlmittel.

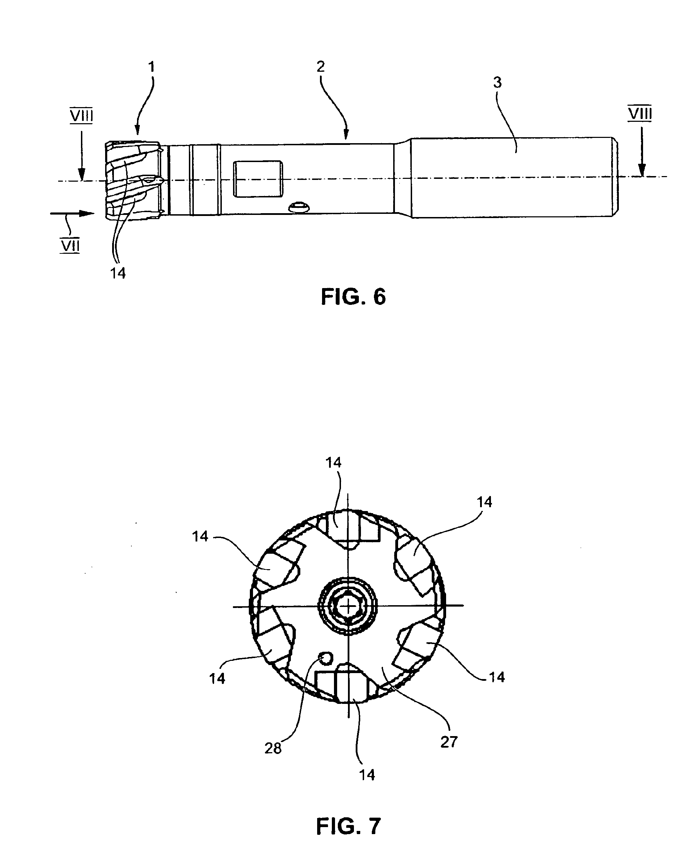

In Fig. 7 erkennbar ist die der Schneidkopfrückwand 7 abgewandte Schneidkopfstirnwand 27. Die Schneidkopfstirnwand 27 in Fig. 7 weist einen Kühlmittelauslauf 28 auf. Das Kühlmittel wird bei der Ausführungsform gemäß Fig. 7 also nicht an die einzelnen Schneiden 14 gefördert, sondern tritt über den Kühlmittelauslauf 28 auf. Diese Ausführungsform eignet sich zur Bearbeitung von Sackbohrungen. Das Kühlmittel spritzt somit zunächst gegen den Boden der Sackbohrung und wird von dort zu den Schneiden 14 hin reflektiert.

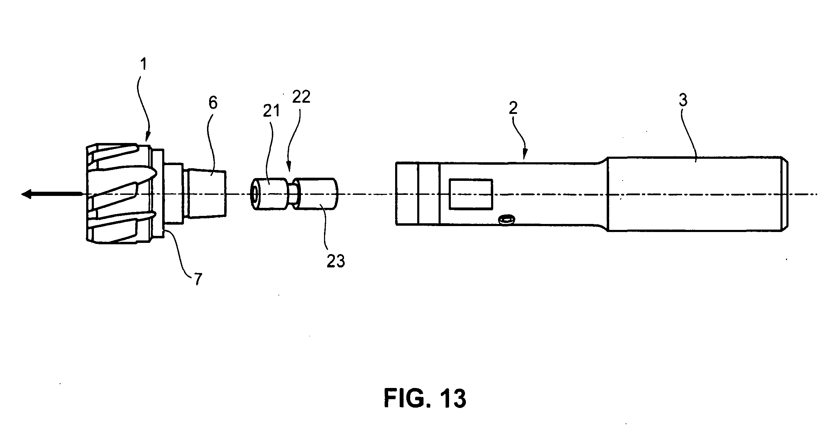

Fig. 13 zeigt wiederum den Schaft 2 und den Schneidkopf 1. Der Schneidkopf 1 trägt wiederum an seiner Schneidkopfrückwand 7 einen Kupplungszapfen 6. Der Kupplungszapfen 6 in Fig. 13 ist jedoch hohlzylindrisch ausgenommen und trägt ein als Rechtsgewinde ausgebildetes Innengewinde. In dieses Innengewinde des Kupplungszapfens 6 ist das Feingewinde 21 des Schraubeinsatzes 22 einschraubbar. Der Schraubeinsatz 22 trägt an seinem dem Feingewinde 21 abgewandten Ende ein Grobgewinde 23. Mit Hilfe des Grobgewindes 23, welches ebenfalls als Rechtsgewinde ausgestaltet ist, ist der Schraubeinsatz 22 in ein Innengewinde in der Aufnahme 5 des Schafts 2 einschraubbar.

## Patentansprüche

1. Zerspanungswerkzeug für eine Werkzeugmaschine mit einem Schneidkopf (1), mit einem Schaft (2) und mit einer den Schneidkopf (1) am Schaft (2) lösbar fixierenden Kupplung, bestehend aus einem Kupplungszapfen (6) an der Schneidkopfrückwand (7) und aus einer zum Kupplungszapfen (6) komplementär ausgebildeten und den Kupplungszapfen (6) bei geschlossener Kupplung aufnehmenden Aufnahme (5) im Schaft (2) und mit einem zentralen Kühlmittelkanal (20) im Schaft (2), welcher sich im Bereich der Aufnahme (5) in zwei Teilkanäle (12) verzweigt, wobei die beiden Teilkanäle (12) die Aufnahme (5) in ihrer Wandung flankieren, wobei
• die beiden Teilkanäle (12) in eine den Öffnungsrand (8) der Aufnahme (5) ringartig umgebende Plananlage (10) an Ausmündungen (11) ausmünden,
• auf der Schneidkopfrückwand (7) ein Planbund (16) mit einer ringförmigen Verteilernut (15) ausgebildet ist und
• mindestens eine Kühlmittelbohrung (19) die Verteilernut (15) mit den Schneiden (14) am Schneidkopf (1) verbindet.
**dadurch gekennzeichnet,**
• **dass** der bei geschlossener Kupplung den Ausmündungen (11) der Teilkanäle (12) in der Plananlage (10) gegenüberliegende Bereich der Verteilernut (15) eine trichterartige Aufweitung (26) aufweist.

2. Werkzeug nach Anspruch 1,
**gekennzeichnet durch**
mehrere über den Umfang des Schneidkopfes (1) verteilt angeordnete Schneiden (14) und **durch** eine der Anzahl der Schneiden (14) entsprechende Anzahl von Kühlmittelbohrungen (19) als Verbindungsleitungen zwischen der Verteilernut (15) und den jeweiligen Schneiden (14).

3. Werkzeug nach Anspruch 1,
**gekennzeichnet durch**,
eine oder mehrere Kühlmittelbohrungen (19) im Schneidkopf (1), welche auf der der Schneidkopfrückwand (7) abgewandten Schneidkopfstirnwand (27) ausmünden.

4. Werkzeug nach einem der Ansprüche 1 bis 3,
**gekennzeichnet durch**
eine halbmondförmige Aussparung (25) am Öffnungsrand (8) der Aufnahme (5) jeweils im Bereich der Ausmündungen (11) der Teilkanäle (12).

5. Werkzeug nach einem der Ansprüche 1 bis 4,
**gekennzeichnet durch**
eine formschlüssige Drehmomentübertragung zwischen Schaft (2) und Schneidkopf (1), bestehend aus mindestens einer am Öffnungsrand (8) der Aufnahme (5) angeordneten, sich in die Aufnahme (5) hinein erstreckende Anlagefläche und aus mindestens einer bei geschlossener Kupplung auf der Anlagefläche aufliegenden Gegenanlagefläche am Außenmantel des Kupplungszapfens (6).

6. Werkzeug nach Anspruche 5,
**dadurch gekennzeichnet,**
**dass** die Anlagefläche und die Gegenanlagefläche als Planflächen (9,18) ausgebildet sind und / oder dass zwei Anlageflächen und zwei Gegenanlageflächen jeweils paarweise und einander gegenüberliegend angeordnet sind.

7. Werkzeug nach einem der Ansprüche 5 oder 6,
**gekennzeichnet durch**
einen den Kupplungszapfen (6) nach Art eines Flansches umgebenden Planbund (16) an der Schneidkopfrückwand (7) und **durch** einen an den Planbund (16) angrenzenden, den Durchmesser des Kupplungszapfens (6) vergrößernden Mantelring (17) am Kupplungszapfen (6) als Träger der Gegenanlagefläche.

8. Werkzeug nach einem der Ansprüche 1 bis 4,
**gekennzeichnet durch**
einen zwei Außengewinde gleicher Gangrichtung und zugleich unterschiedlicher Steigung tragenden Schraubeinsatz (22) als Außengewindeträger, **durch** eine hohlzylindrische Ausnehmung im Kupplungszapfen (6) als Innengewindeträger mit einem das eine Außengewinde des Schraubeinsatzes (22) aufnehmenden Innengewinde und **durch** ein das andere Außengewinde des Schraubeinsatzes (22) aufnehmendes Innengewinde in der Aufnahme (5).

9. Werkzeug nach Anspruch 8,
**gekennzeichnet durch**
zwei als Rechtsgewinde ausgebildete Außengewinde am Schraubeinsatz (22) und / oder **durch** ein Feingewinde (21) am Schneidkopf (1) und **durch** ein Grobgewinde (23) im Schaft (2) und **durch** entsprechende komplementär ausgebildete Gewinde am Schraubeinsatz (22).

## Claims

1. Cutting tool for a machine tool, comprising a cutting head (1), comprising a shank (2) and comprising a coupling which detachably fixes the cutting head (1) to the shank (2), said coupling consisting of a coupling pin (6) on the cutting-head rear wall (7) and of a receptacle (5) in the shank (2), said receptacle (5) being complementary to the coupling pin (6) and accommodating the coupling pin (6) when the coupling is closed, and comprising a central coolant passage (20) in the shank (2), said coolant passage (20) branching into two sub-passages (12) in the region of the receptacle (5), wherein the two sub-passages (12) flank the receptacle (5) in the wall thereof,
wherein
• the two sub-passages (12) open at orifices (11) into a flat contact surface (10) surrounding the opening edge (8) of the receptacle (5) in a ring-like manner,
• a flat collar (16) having an annular distribution groove (15) is formed on the cutting-head rear wall (7), and
• at least one coolant bore (19) connects the distribution groove (15) to the blades (14) on the cutting head (1)
**characterized**
• **in that** that region of the distribution groove (15) which is located opposite the orifices (11) of the sub-passages (12) in the flat contact surface (10) when the coupling is closed has a funnel-like widening (26).

2. Tool according to Claim 1, **characterized by** a plurality of blades (14) distributed over the periphery of the cutting head (1) and by a number of coolant bores (19), corresponding to the number of blades (14), as connecting lines between the distribution groove (15) and the respective blades (14).

3. Tool according to Claim 1, **characterized by** one or more coolant bores (19) in the cutting head (1) which open out on the cutting-head end wall (27) remote from the cutting-head rear wall (7).

4. Tool according to one of Claims 1 to 3, **characterized by** a crescent-shaped recess (25) at the opening edge (8) of the receptacle (5) in each case in the region of the orifices (11) of the sub-passages (12).

5. Tool according to one of Claims 1 to 4, **characterized by** positive-locking torque transmission between shank (2) 1 and cutting head (1), consisting of at least one bearing surface arranged at the opening edge (8) of the receptacle (5) and extending into the receptacle (5) and of at least one mating bearing surface on the outer casing of the coupling pin (6), said mating bearing surface resting on the bearing surface when the coupling is closed.

6. Tool according to Claim 5, **characterized in that** the bearing surface and the mating bearing surface are designed as flat faces (9, 18) and/or **in that** two bearing surfaces and two mating bearing surfaces are in each case arranged in pairs and opposite one another.

7. Tool according to either of Claims 5 and 6, **characterized by** a flat collar (16) on the cutting-head rear wall (7), said flat collar (16) surrounding the coupling pin (6) like a flange, and by a casing ring (17) on the coupling pin (6), which casing ring (17) adjoins the flat collar (16), enlarges the diameter of the coupling pin (6) and has the mating bearing surface.

8. Tool according to one of Claims 1 to 4, **characterized by** a screwing insert (22) as externally threaded part which has two external threads with the same direction of hand and at the same time different pitches, by a hollow-cylindrical recess in the coupling pin (6) as internally threaded part having an internal thread receiving the one external thread of the screwing insert (22), and by an internal thread in the receptacle (5), said internal thread receiving the other external thread of the screwing insert (22).

9. Tool according to Claim 8, **characterized by** two external threads, designed as right-hand threads, on the screwing insert (22) and/or by a fine thread (21) on the cutting head (1) and by a coarse thread (23) in the shank (2) and by corresponding complementary threads on the screwing insert (22).

## Revendications

1. Outil de coupe pour une machine-outil, comprenant une tête de coupe (1), une tige (2) et un accouplement fixant de manière amovible la tête de coupe (1) à la tige (2), constitué d'un tourillon d'accouplement (6) sur la paroi arrière de la tête de coupe (7) et d'un logement (5) dans la tige (2) réalisé de manière complémentaire au tourillon d'accouplement (6) et recevant le tourillon d'accouplement (6) lorsque l'accouplement est fermé et comprenant un canal de réfrigérant central (20) dans la tige (2), lequel anal se divise en deux canaux partiels (12) dans la région du logement (5), les deux canaux partiels (12) s'appliquant contre la paroi du logement (5),
- les deux canaux partiels (12) débouchant dans un appui plan (10) entourant sous forme annulaire le bord d'ouverture (8) du logement (5) au niveau d'embouchures (11),
- un épaulement plan (16) avec une rainure de distribution annulaire (15) étant réalisé sur la paroi arrière de la tête de coupe (7) et
- au moins un alésage de réfrigérant (19) reliant la rainure de distribution (15) aux arêtes de coupe (14) sur la tête de coupe (1), **caractérisé en ce que**
- lorsque l'accouplement est fermé, la région de la rainure de distribution (15) opposée aux embouchures (11) des canaux partiels (12) dans l'appui plan (10) présente un élargissement (26) en forme d'entonnoir.

2. Outil selon la revendication 1,
**caractérisé par**
plusieurs arêtes de coupe (14) réparties sur la périphérie de la tête de coupe (1) et par un nombre d'alésages de réfrigérant (19) correspondant au nombre des arêtes de coupe (14), en tant que conduites de liaison entre la rainure de distribution (15) et les arêtes de coupe respectives (14).

3. Outil selon la revendication 1,
**caractérisé par**
un ou plusieurs alésages de réfrigérant (19) dans la tête de coupe (1), qui débouchent sur la paroi frontale (27) de la tête de coupe opposée à la paroi arrière de la tête de coupe (7).

4. Outil selon l'une quelconque des revendications 1 à 3,
**caractérisé par**
un évidement en forme de demi-lune (25) au niveau du bord d'ouverture (8) du logement (5) à chaque fois dans la région des embouchures (11) des canaux partiels (12).

5. Outil selon l'une quelconque des revendications 1 à 4,
**caractérisé par**
un transfert de couple par engagement par correspondance géométrique entre la tige (2) et la tête de coupe (1), constitué d'au moins une face d'appui disposée sur le bord d'ouverture (8) du logement (5), s'étendant dans le logement (5), et d'au moins une surface d'appui conjuguée sur l'enveloppe extérieure du tourillon d'accouplement (6), reposant sur la surface d'appui lorsque l'accouplement est fermé.

6. Outil selon la revendication 5,
**caractérisé en ce que**
la surface d'appui et la surface d'appui conjuguée sont réalisées sous forme de surfaces planes (9, 18) et/ou **en ce que** deux surfaces d'appui et deux surfaces d'appui conjuguées sont disposées à chaque fois par paire et en regard l'une de l'autre.

7. Outil selon l'une quelconque des revendications 5 ou 6,
**caractérisé par**
un épaulement plan (16) entourant le tourillon d'accouplement (6) .à la manière d'une bride au niveau de la paroi arrière de la tête de coupe (7) et par une bague d'enveloppe (17) sur le tourillon d'accouplement (6), adjacente à l'épaulement plan (16), augmentant le diamètre du tourillon d'accouplement (6), servant de support pour la surface d'appui conjuguée.

8. Outil selon l'une quelconque des revendications 1 à 4,
**caractérisé par**
un insert fileté (22) portant deux filetages extérieures de même sens de filet et en même temps de pas différent en tant que support fileté extérieur, par un évidement cylindrique creux dans le tourillon d'accouplement (6) en tant que support fileté intérieur avec un filetage intérieur recevant l'un des filetages extérieures de l'insert fileté (22) et par un filetage intérieur dans le logement (5) recevant l'autre filetage extérieur de l'insert fileté (22).

9. Outil selon la revendication 8,
**caractérisé par**
deux filetages extérieurs réalisés en tant que filetages à droite sur l'insert fileté (22) et/ou par un filetage fin (21) sur la tête de coupe (1) et par un filetage grossier (23) dans la tige (2) et par des filetages complémentaires correspondants sur l'insert fileté (22).
